(19)

Europäisches Patentamt
European Patent Office
Office européen des brevets

(11) **EP 4 015 704 A1**

(12) **EUROPEAN PATENT APPLICATION**
published in accordance with Art. 153(4) EPC

(43) Date of publication:
**22.06.2022 Bulletin 2022/25**

(21) Application number: **20852835.6**

(22) Date of filing: **07.08.2020**

(51) International Patent Classification (IPC):
$D07B\ 1/06$ (2006.01)   $B60C\ 1/00$ (2006.01)
$B65G\ 15/36$ (2006.01)   $C08J\ 5/04$ (2006.01)
$C08K\ 3/04$ (2006.01)   $C08K\ 3/08$ (2006.01)
$C08K\ 3/36$ (2006.01)   $C08L\ 21/00$ (2006.01)
$C08L\ 61/04$ (2006.01)   $D06M\ 11/74$ (2006.01)
$D06M\ 11/79$ (2006.01)   $D06M\ 11/83$ (2006.01)
$D06M\ 15/41$ (2006.01)   $D06M\ 15/693$ (2006.01)
$F16L\ 11/08$ (2006.01)

(52) Cooperative Patent Classification (CPC):
**B60C 1/00; B65G 15/36; C08J 5/04; C08K 3/04; C08K 3/08; C08K 3/36; C08L 21/00; C08L 61/04; D06M 11/74; D06M 11/79; D06M 11/83; D06M 15/41; D06M 15/693; D07B 1/06; F16L 11/08**

(86) International application number:
**PCT/JP2020/030431**

(87) International publication number:
**WO 2021/029378 (18.02.2021 Gazette 2021/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.08.2019 JP 2019148929**

(71) Applicant: **BRIDGESTONE CORPORATION**
**Chuo-ku**
**Tokyo 104-8340 (JP)**

(72) Inventors:
• **HASEGAWA, Yudai**
**Tokyo 104-8340 (JP)**
• **MIYAZAKI, Yoshinori**
**Tokyo 104-8340 (JP)**

(74) Representative: **Oxley, Robin John George**
**Marks & Clerk LLP**
**15 Fetter Lane**
**London EC4A 1BW (GB)**

(54) **STEEL CORD/RUBBER COMPOSITE, TIRE, CONVEYOR BELT, HOSE, AND RUBBER CRAWLER**

(57) Provided is a steel cord/rubber composite which is excellent in terms of wet-heat adhesion between the vulcanized rubber and the steel cords and in which the vulcanized rubber has excellent low-loss characteristics. The steel cord/rubber composite is one obtained from steel cords and a rubber composition for covering the steel cords, wherein the rubber composition comprises a rubber component, a filler, a phenolic resin, and a methylene donor and has a cobalt compound content of 0.01 part by mass or less based on 100 parts by mass of the rubber component and the steel cords have been plated with a ternary alloy.

**Description**

Technical Field

The present invention relates to a steel cord/rubber composite, a tire, a conveyor belt, a hose, and a rubber crawler.

Background Art

For the purpose of achieving both low hysteresis loss and crack propagation resistance at high levels, PTL 1 discloses a rubber composition having a composition containing a rubber component, a carbon black having a DBP absorption of 50 to 100 cm$^3$/100 g, a phenolic resin, and a methylene donor, in which the ratio of the 200% modulus (M200) to the 50% modulus (M50) is 5.0 or less (M200/M50 $\leq$ 5.0).

Citation List

Patent Literature

PTL 1: WO2018/230048

Summary of Invention

Technical Problem

In a tire including a vulcanized rubber and a steel cord, as described in PTL 1, improvements in low hysteresis loss and crack propagation resistance are studied, but adhesion between the steel cord and the vulcanized rubber under a wet-hot environment has not been sufficiently studied.
In view of the above situation, the present invention has an object to provide a steel cord/rubber composite that is excellent in wet-hot adhesion between a vulcanized rubber and a steel cord, and is also excellent in low hysteresis loss of the vulcanized rubber, and to provide a tire, a conveyor belt, a hose, and a rubber crawler that are excellent in wet-hot adhesion between a vulcanized rubber and a steel cord, and are excellent in low hysteresis loss. The present invention has a problem to solve the object.

Solution to Problem

As a result of intensive and extensive studies, the present inventors have found that, by applying a specific rubber composition on a steel cord having a ternary alloy plating applied thereon, the adhesion between the vulcanized rubber and the steel cord is excellent even under a wet-hot environment and the low hysteresis loss of the vulcanized rubber is enhanced, and thus the above problem can be solved.
Specifically, the present invention relates to the following <1> to <14>.

<1> A steel cord/rubber composite including a steel cord and a rubber composition that covers the steel cord, the rubber composition containing a rubber component, a filler, a phenolic resin, and a methylene donor, and having a cobalt compound content of 0.01 parts by mass or less based on 100 parts by mass of the rubber component, the steel cord having a ternary alloy plating applied thereon.
<2> The steel cord/rubber composite according to <1>, wherein the filler contains a carbon black and a silica.
<3> The steel cord/rubber composite according to <2>, wherein the rubber composition contains the carbon black in an amount of 35 parts by mass or more and 50 parts by mass or less based on 100 parts by mass of the rubber component.
<4> The steel cord/rubber composite according to <2> or <3>, wherein the carbon black has a nitrogen adsorption specific surface area of 70 m$^2$/g or more and 90 m$^2$/g or less and a dibutyl phthalate absorption of 50 mL/100 g or more and 110 mL/100 g or less.
<5> The steel cord/rubber composite according to any one of <2> to <4>, wherein the rubber composition contains the silica in an amount of more than 0 parts by mass and 15 parts by mass or less based on 100 parts by mass of the rubber component.
<6> The steel cord/rubber composite according to any one of <1> to <5>, wherein the rubber composition contains a vulcanization accelerator containing N-cyclohexyl-2-benzothiazolylsulphenamide.
<7> The steel cord/rubber composite according to any one of <1> to <6>, wherein the phenolic resin contains two or more phenolic resins including at least an alkylphenolic resin.

<8> The steel cord/rubber composite according to <7>, wherein the phenolic resin contains an unmodified phenol-formaldehyde resin and an alkylphenol-formaldehyde resin.

<9> The steel cord/rubber composite according to any one of <1> to <8>, wherein the cobalt compound content in the rubber composition is 0% by mass.

<10> The steel cord/rubber composite according to any one of <1> to <9>, wherein the ternary alloy plating on the steel cord is of metal species including copper, zinc, and cobalt.

<11> The steel cord/rubber composite according to any one of <1> to <10>, wherein the steel cord is surface-treated on the alloy plating.

<12> A tire produced by using the steel cord/rubber composite according to any one of <1> to <11>.

<13> A conveyor belt produced by using the steel cord/rubber composite according to any one of <1> to <11>.

<14> A hose produced by using the steel cord/rubber composite according to any one of <1> to <11>.

<15> Arubber crawler produced by using the steel cord/rubber composite according to any one of <1> to <11>.

Advantageous Effects of Invention

According to the present invention, it is possible to provide a steel cord/rubber composite that is excellent in wet-hot adhesion between a vulcanized rubber and a steel cord, and is excellent in low hysteresis loss of the vulcanized rubber, and provide a tire, a conveyor belt, a hose, and a rubber crawler that are excellent in wet-hot adhesion between a vulcanized rubber and a steel cord, and are excellent in low hysteresis loss.

Description of Embodiments

The present invention will be illustrated and described in detail below based on embodiments thereof. Note that, in the description below, the statement "A to B" which shows a numerical range represents a numerical range including the end points A and B, and represents "A or more and B or less" (in the case of A<B) or "A or less and B or more" (in the case of A>B).

In addition, "parts by mass" and "% by mass" respectively have the same meanings as "parts by weight" and "% by weight".

«Steel cord/rubber composite»

The steel cord/rubber composite of the present invention is a steel cord/rubber composite including a steel cord and a rubber composition that covers the steel cord. The rubber composition contains a rubber component, a filler, a phenolic resin, and a methylene donor, and has a cobalt compound content of 0.01 parts by mass or less based on 100 parts by mass of the rubber component, the steel cord having a ternary alloy plating applied thereon.

In the present invention, the "rubber composition" means a mixture containing a rubber component and other components, and is in an unvulcanized state. A rubber obtained by vulcanizing a rubber component or a rubber composition is referred to as "vulcanized rubber". The "steel cord/rubber composite" is a composite of a rubber composition before vulcanization and a steel cord, and the composite resulting after vulcanizing the rubber composition in the steel cord/rubber composite is referred to as a "steel cord/vulcanized rubber composite".

Although the reason is not clear why the steel cord/rubber composite is excellent in the wet-hot adhesion between the vulcanized rubber and the steel cord and in the low hysteresis loss of the vulcanized rubber when the steel cord/rubber composite of the present invention has the above configuration, the reason is presumed as follows.

Since the rubber composition that constitutes the rubber part of the steel cord/rubber composite contains the rubber component, the filler, the phenolic resin, and the methylene donor, a vulcanized rubber having an enhanced low hysteresis loss is obtained. At the same time, since the steel cord has a ternary alloy plating applied thereon, the vulcanized rubber and the steel cord are strongly bonded upon vulcanizing the rubber composition so that the adhesion is excellent even under a wet-hot environment (for example, 50°C, 75%RH). In addition, by applying the steel cord/rubber composite of the present invention to a tire, the tire includes the steel cord/vulcanized rubber composite as a belt or the like and a composite thereof with a vulcanized rubber covering layer. Since the steel cord/vulcanized rubber composite is obtained by vulcanizing the steel cord/rubber composite of the present invention, the adhesion between the steel cord and the vulcanized rubber is excellent even under a wet-hot environment (for example, 50°C, 75%RH) and the tire is excellent in the low hysteresis loss.

In the present invention, since the cobalt compound content in the rubber composition is 0.01 parts by mass or less based on 100 parts by mass of the rubber component, the burden on environment can also be reduced.

The steel cord/rubber composite and the tire of the present invention will be described in detail below.

<Steel cord>

From the viewpoint of suitably ensuring adhesion with a vulcanized rubber, the surface of a steel cord is generally often treated with various platings or adhesives in many cases. In the present invention, the steel cord has a ternary alloy plating applied thereon. Since the steel cord is covered with the rubber composition according to the present invention, a steel cord/vulcanized rubber composite excellent in the wet-hot adhesion between the vulcanized rubber and the steel cord is obtained upon vulcanizing the rubber composition in the steel cord/rubber composite.

The steel cord may be either of a steel monofilament or multifilament (a twisted cord or a bundle cord in which filaments are paralleled with elongation) and the shape thereof is not limited. The twist structure when the steel cord is a twisted cord is not particularly limited, and examples thereof include a single twist structure, a combination twist structure, a layer twist structure, and a composite twist structure of a combination twist and a layer twist.

The steel cord preferably has a diameter of 0.60 mm or less, and more preferably 0.40 mm or less. With a diameter of 0.60 mm or less, the surface strain of a rubber article in which the steel cord is used is reduced when the rubber article is subjected to repeated strain under bending deformation, leading to less occurrence of buckling.

An example of the ternary alloy plating is a plating of a combination of three metals containing an alloy plating, such as a brass (copper-zinc (Cu-Zn)) plating or a bronze (copper-tin (Cu-Sn)) plating, and Co (cobalt) or Ni (nickel).

Among them, from the viewpoint of enhancing the wet-hot adhesion between the vulcanized rubber and the steel cord, a ternary alloy plating containing Co (cobalt) is preferred, and a ternary alloy plating that is a cobalt-containing brass plating is more preferred. In other words, the metal species in the ternary alloy plating of the steel cord more preferably include copper, zinc, and cobalt.

More specifically, the cobalt-containing brass plating is preferably a ternary alloy plating composed of 58 to 70% by mass of Cu (copper), 0.5 to 10% by mass of Co (cobalt), and a balance of Zn (zinc).

The steel cord having a ternary alloy plating applied thereon is obtained by, for example, adjusting the mass ratio of Cu (copper), Zn (zinc), and Co (cobalt), then repeatedly plating a steel cord with Cu, Zn, and Co in the adjusted masses in this order, and then performing thermal diffusion at 450 to 550°C for 3 to 6 seconds.

When the Cu content in the alloy plating is 58% by mass or more, the drawability of the steel cord increases, leading to less occurrence of breaking of the cord which results in increased productivity. On the other hand, when the Cu content in the alloy plating is 70% by mass or less, the wet-hot adhesion between the vulcanized rubber and the steel cord is enhanced more so that a tire can acquire sufficient durability against an environment to which the tire is subjected. When the Co content in the alloy plating falls within 0.5 to 10% by mass, the wet-hot adhesion between the vulcanized rubber and the steel cord is enhanced, which is preferred.

The average thickness of the alloy plating layer is suitably 0.13 to 0.35 $\mu$m, and further suitably 0.13 to 0.30 $\mu$m. When the average thickness of the alloy plating layer is 0.13 pm or more, a part where an iron base is exposed is reduced and the initial adhesion between the vulcanized rubber and the steel cord is enhanced. On the other hand, with a thickness of 0.35 pm or less, excessive progression of adhesion reaction by heat in use of a rubber article can be inhibited to achieve stronger adhesion between the vulcanized rubber and the steel cord.

The steel cord in the present invention is preferably surface-treated on the aforementioned alloy plating.

For example, when an adhesion treatment is used on the steel cord surface, an adhesive, such as the tradename "Chemlok" (registered tradename) manufactured by Load Corporation, is preferably applied.

<Rubber composition>

The steel cord/rubber composite of the present invention contains a rubber composition (sometimes referred to as the rubber composition of the present invention) that covers the steel cord.

The rubber composition of the present invention contains a rubber component, a filler, a phenolic resin, and a methylene donor, and the cobalt compound content in the rubber composition is 0.01 parts by mass or less based on 100 parts by mass of the rubber component.

The rubber composition may further contain a resin reaction accelerator, a vulcanization accelerator, an antioxidant, and the like.

[Rubber component]

An example of the rubber component is at least one diene rubber selected from the group consisting of a natural rubber (NR) and a synthetic diene rubber. The rubber component may be modified or unmodified.

Specific examples of the synthetic diene rubber include polyisoprene rubber (IR), polybutadiene rubber (BR), styrene-butadiene copolymer rubber (SBR), butadiene-isoprene copolymer rubber (BIR), styrene-isoprene copolymer rubber (SIR), styrene-butadiene-isoprene copolymer rubber (SBIR), and a modified rubber thereof.

From the viewpoint of achieving both the low hysteresis loss of the vulcanized rubber and the wet-hot adhesion between the steel cord and the vulcanized rubber at high levels, the diene rubber is preferably a natural rubber, polyisoprene rubber, styrene-butadiene copolymer rubber, polybutadiene rubber, isobutylene isoprene rubber, or a modified rubber thereof, more preferably a natural rubber or polybutadiene rubber, and further preferably a natural rubber.

One of the diene rubbers may be used alone or two or more thereof may be used in blend.

From the viewpoint of achieving both the low hysteresis loss of the vulcanized rubber and the wet-hot adhesion between the steel cord and the vulcanized rubber at high levels, the rubber component preferably contains a natural rubber in an amount of 55% by mass or more, more preferably 65% by mass or more, and further preferably 75% by mass or more. The upper limit of the proportion of the natural rubber in the rubber component is 100% by mass.

The rubber component may contain a non-diene rubber to the extent that the effect of the present invention is not impaired.

[Filler]

The rubber composition contains a filler.

As the filler, a reinforcing filler which can reinforce a vulcanized rubber is preferably used, and examples thereof include a carbon black and a metal oxide, such as silica, alumina, or zirconia. The filler preferably contains at least a carbon black and a silica.

(Carbon black)

The type of the carbon black is not particularly limited, and examples thereof include GPF, FEF, HAF, ISAF, and SAF.

From the viewpoint of enhancing the durability of the tire, the carbon black preferably has a nitrogen adsorption specific surface area ($N_2SA$) of 70 $m^2/g$ or more and 90 $m^2/g$ or less and a dibutyl phthalate absorption (DBP absorption) of 50 mL/100 g or more and 110 mL/100 g or less.

From the viewpoint of enhancing the durability of the tire, the nitrogen adsorption specific surface area of the carbon black is more preferably 70 $m^2/g$ or more and 85 $m^2/g$ or less, and further preferably 73 $m^2/g$ or more and 83 $m^2/g$ or less. Similarly, from the viewpoint of enhancing the durability of the tire, the dibutyl phthalate absorption of the carbon black is more preferably 65 mL/100 g or more and 110 mL/100 g or less, and further preferably 90 mL/100 g or more and 110 mL/100 g or less. In addition, since bond durability of the tire is improved by suppressing heat generation (loss), the grade of the carbon black is preferably HAF grade which is a grade having a low heat generation property (low hysteresis loss).

The $N_2SA$ of the carbon black is determined by the method A of JIS K 6217-2:2001 (Determination of specific surface area-Nitrogen adsorption methods-Single-point procedures). The DBP absorption of the carbon black is measured by the method defined in JIS K 6217-4:2001 "Determination of DBP absorption" and is expressed as a volume (ml) of dibutyl phthalate (DBP) that is absorbed by 100 g of the carbon black.

From the viewpoint of enhancing the durability of the tire, the content of the carbon black in the rubber composition is preferably 35 parts by mass or more and 50 parts by mass or less based on 100 parts by mass of the rubber component, more preferably 37 parts by mass or more and 45 parts by mass or less, and further preferably 37 parts by mass or more and 43 parts by mass or less.

(Silica)

The rubber composition preferably contains a silica as the filler.

Since the rubber composition contains a silica, the reaction of the phenolic resin is accelerated, resulting in more enhancement of the low hysteresis loss of the vulcanized rubber obtained from the rubber composition and more enhancement of the wet-hot adhesion of the vulcanized rubber to the steel cord.

The type of the silica is not particularly limited, and examples thereof include wet method silica (hydrous silicate), dry method silica (anhydrous silicate), and colloidal silica. One of the silicas may be used alone or two or more thereof may be used in combination.

From the viewpoint of more enhancing the low hysteresis loss of the vulcanized rubber and the wet-hot adhesion of the vulcanized rubber to the steel cord, the silica preferably has a cetyltrimethylammonium bromide (CTAB) specific surface area of 80 $m^2/g$ or more and 250 $m^2/g$ or less, more preferably 100 $m^2/g$ or more and 200 $m^2/g$ or less, and further preferably 120 $m^2/g$ or more and 180 $m^2/g$ or less.

The CTAB specific surface area of the silica can be measured by a method based on the method of ASTM-D3765-80.

In the rubber composition of the present invention, a silane coupling agent may further be used for enhancing the dispersibility of the silica.

From the viewpoint of more enhancing the low hysteresis loss of the vulcanized rubber and the wet-hot adhesion of the vulcanized rubber to the steel cord, the content of the silica in the rubber composition is preferably more than 0 parts by mass and 15 parts by mass or less based on 100 parts by mass of the rubber component. Since the content of the silica is more than 0 parts by mass based on 100 parts by mass of the rubber component, the reaction of the phenolic resin is accelerated, and since the content is 15 parts by mass or less, the viscosity of the rubber composition is suppressed, leading to excellent workability. The content of the silica in the rubber composition is preferably 0.5 parts by mass or more and 12 parts by mass or less based on 100 parts by mass of the rubber component, and further preferably 0.5 parts by mass or more and 10 parts by mass or less. From the viewpoint of the workability of the rubber composition, the content of the silica in the rubber composition may be less than 5 parts by mass based on 100 parts by mass of the rubber component.

[Phenolic resin]

The rubber composition contains a phenolic resin.

Since the rubber composition contains a phenolic resin, the vulcanized rubber obtained from the rubber composition is excellent in the low hysteresis loss, and is excellent in the wet-hot adhesion of the vulcanized rubber to the steel cord.

The phenolic resin is not particularly limited, and can be appropriately selected according to the requested performance. An example thereof is a phenol resin that is produced by subjecting a phenol compound, such as phenol, cresol, resorcin, or tert-butylphenol, or a mixture of the phenol compounds and formaldehyde to a condensation reaction in the presence of an acid catalyst, such as hydrochloric acid or oxalic acid.

The phenolic resin may be unmodified or modified.

Examples of the unmodified phenolic resin include a phenolic resin and a phenol-formaldehyde resin.

The modified phenolic resin, for example, has a structure in which an unmodified phenolic resin is modified with an oil, such as rosin oil, toll oil, cashew oil, linoleic acid, oleic acid, or linolenic acid, and has a substituent, such as a hydrocarbon group (for example, an alkyl group, etc.), on the phenolic backbone of the phenolic resin.

In the present invention, a phenolic resin having an alkyl group on the phenolic backbone of the phenolic resin is referred to as an alkylphenolic resin. The number of alkyl groups in the alkylphenolic resin (the number of alkyl groups binding to the phenol backbone) and the number of carbon atoms in the alkyl group are not particularly limited, but the number of the alkyl groups is generally 1 to 3, and the number of carbon atoms in one alkyl group is preferably 1 to 15 and more preferably 5 to 10. The alkyl group may be linear, branched, or cyclic, but is preferably branched.

One of the phenolic resins can be contained alone or two or more thereof may be contained in mixture.

From the viewpoint of more enhancing the low hysteresis loss of the vulcanized rubber obtained from the rubber composition, the phenolic resin preferably contains two or more phenolic resins including at least an alkylphenolic resin. Specifically, examples of the manner of containing include (1) a manner of containing one alkylphenolic resin and containing one or more alkylphenolic resins different from the former alkylphenolic resin (other alkylphenolic resins), (2) a manner of containing one alkylphenolic resin and containing one or more phenolic resins that are not an alkylphenolic resin (other phenolic resins), and (3) a manner of containing one alkylphenolic resin and containing one or more other alkylphenolic resins and one or more other phenolic resins.

Among them, from the viewpoint of more enhancing the low hysteresis loss of the vulcanized rubber obtained from the rubber composition, (2) a manner of containing one alkylphenolic resin and containing one or more other phenolic resins is preferred, and a manner of containing one alkylphenolic resin and containing one or more unmodified phenolic resins is more preferred.

Specifically, it is preferred that a phenol-formaldehyde resin and an alkylphenol-formaldehyde resin are used in combination.

From the viewpoint of enhancing the low hysteresis loss of the vulcanized rubber, the content of the phenolic resins (total amount of the phenolic resins) in the rubber composition is preferably 1 to 20 parts by mass based on 100 parts by mass of the rubber component, and more preferably 3 to 15 parts by mass.

From the viewpoint of enhancing the low hysteresis loss of the vulcanized rubber, the content of the alkylphenolic resins in the rubber composition is preferably 0.1 to 10 parts by mass based on 100 parts by mass of the rubber component, more preferably 0.3 to 5 parts by mass, and further preferably 0.5 to 3 parts by mass.

In addition, when a unmodified phenolic resin and an alkylphenolic resin are used in combination, it is preferred that the total content thereof in the rubber composition is 1 to 20 parts by mass based on 100 parts by mass of the rubber component, and the ratio by mass of the unmodified phenolic resin : the alkylphenolic resin is 2:1 to 10:1.

[Methylene donor]

The rubber composition contains a methylene donor.

A methylene donor functions as a curing agent for a phenolic resin so that the vulcanized rubber of the rubber composition has an excellent low heat generation property and is excellent in the wet-hot adhesion of the vulcanized rubber to the steel cord.

The type of the methylene donor is not particularly limited, and can be appropriately selected according to the requested performance. Examples thereof include hexamethylenetetramine, hexamethoxymethylolmelamine, pentamethoxymethylolmelamine, hexamethoxymethylmelamine, pentamethoxymethylmelamine, hexaethoxymethylmelamine, hexakis-(methoxymethyl)melamine, N,N',N"-trimethyl-N,N',N"-trimethylolmelamine, N,N',N"-trimethylolmelamine, N-methylolmelamine, N,N'-(methoxymethyl)melamine, N,N',N"-tributyl-N,N',N"-trimethylolmelamine, and a paraformaldehyde. Among them, the methylene donor is preferably at least one selected from the group consisting of hexamethylenetetramine, hexamethoxymethylmelamine, hexamethoxymethylolmelamine, and paraformaldehyde.

One of the methylene donors may be used alone or two or more thereof may be used in combination.

The content of the methylene donor in the rubber composition is preferably 1 to 10 parts by mass based on 100 parts by mass of the rubber component, and more preferably 1 to 5 parts by mass.

In addition, from the viewpoint of achieving both the low heat generation property of the vulcanized rubber and the wet-hot adhesion of the vulcanized rubber to the steel cord at higher levels, the ratio by mass (p/m) of the content of the phenolic resin (p) to the content of the methylene donor (m) in the rubber composition is preferably 1.00 to 5.00, and more preferably 1.40 to 3.00.

[Cobalt compound]

In the present invention, from the viewpoint of reducing the environmental load, the cobalt compound content in the rubber composition is preferably substantially 0 parts by mass based on 100 parts by mass of the rubber component. Specifically, the content is 0.01 parts by mass or less based on 100 parts by mass of the rubber component, and preferably 0 parts by mass. In addition, the cobalt compound content in the rubber composition is preferably 0% by mass.

When a vulcanized rubber is to be bonded to a metal, a cobalt compound has heretofore been used as an adhesion promoting component. In the present invention, however, with the aforementioned combination of the rubber composition and the steel cord having a ternary alloy plating applied thereon, an excellent adhesion is achieved even when the rubber composition contains no cobalt compound.

The type of the cobalt compound is not particularly limited, and an organic acid cobalt salt, a cobalt metal complex, or the like has heretofore been used.

Examples of the organic acid cobalt salt include cobalt naphthenate, cobalt stearate, cobalt t-decanoate, cobalt rosinate, toll oil acid cobalt salt, cobalt oleate, cobalt linoleate, cobalt linolenate, and cobalt palmitate.

An example of the cobalt metal complex is cobalt acetylacetonate.

The rubber composition can contain, in addition to the rubber component, the filler, the phenolic resin, and the methylene donor as described above, other components to the extent that the effect of the present invention is not impaired.

As the other components, additives which are generally used in the rubber industry, such as a vulcanizer, a crosslinker, a vulcanization accelerator, a vulcanization accelerator aid, an antirust agent, and an antioxidant, can be appropriately contained.

(Vulcanizer, crosslinker)

As a vulcanizer for vulcanizing the rubber composition, sulfur is generally used.

Examples of the sulfur include powder sulfur, precipitated sulfur, colloidal sulfur, surface-treated sulfur, and insoluble sulfur.

As a crosslinker, a bismaleimide compound or the like is used. Note that the crosslinker refers to a crosslinker for crosslinking sulfur, that is, a sulfur-free crosslinker excluding a vulcanizer.

As for the type of the bismaleimide compound, for example, N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, bis(3-ethyl-5-methyl-4-maleimidephenyl)methane and the like can be exemplified. In the present invention, N,N'-m-phenylenebismaleimide, N,N'-(4,4'-diphenylmethane)bismaleimide, and the like can be suitably used.

From the viewpoint of enhancing the low heat generation property of the vulcanized rubber and the wet-hot adhesion of the vulcanized rubber to the steel cord, the content of the vulcanizer in the rubber composition is preferably 2 parts by mass or more and 15 parts by mass or less based on 100 parts by mass of the rubber component, and more preferably 3 parts by mass or more and 10 parts by mass or less.

From the viewpoint of enhancing the low heat generation property of the vulcanized rubber and the wet-hot adhesion of the vulcanized rubber to the steel cord, the content of the crosslinker in the rubber composition is preferably 0.1 parts by mass or more and 5 parts by mass or less based on 100 parts by mass of the rubber component, and more preferably 0.3 parts by mass or more and 2 parts by mass or less.

(Vulcanization accelerator)

The rubber composition preferably contains a vulcanization accelerator for further accelerating vulcanization of the rubber component.

Examples of the vulcanization accelerator include various vulcanization accelerators, such as guanidine-based, thiuram-based, aldehyde-amine-based, aldehyde-ammonia-based, thiazole-based, sulphenamide-based, thiourea-based, dithiocarbamate-based, and xanthate-based. One of the vulcanization accelerators may be used alone or two or more thereof may be used.

Among them, from the viewpoint of enhancing the durability of the vulcanized rubber and the wet-hot adhesion between the vulcanized rubber and the steel cord, a sulphenamide-based vulcanization accelerator is preferably contained.

[Sulphenamide vulcanization accelerator]

Examples of the sulphenamide-based vulcanization accelerator include N-cyclohexyl-2-benzothiazolylsulphenamide, N,N-dicyclohexyl-2-benzothiazolylsulphenamide, N-tert-butyl-2-benzothiazolylsulphenamide, N-oxydiethylene-2-benzothiazolylsulphenamide, N-methyl-2-benzothiazolylsulphenamide, N-ethyl-2-benzothiazolylsulphenamide, N-propyl-2-benzothiazolylsulphenamide, N-butyl-2-benzothiazolylsulphenamide, N-pentyl-2-benzothiazolylsulphenamide, N-hexyl-2-benzothiazolylsulphenamide, N-heptyl-2-benzothiazolylsulphenamide, N-octyl-2-benzothiazolylsulphenamide, N-2-ethylhexyl-2-benzothiazolylsulphenamide, N-decyl-2-benzothiazolylsulphenamide, N-dodecyl-2-benzothiazolylsulphenamide, N-stearyl-2-benzothiazolylsulphenamide, N,N-dimethyl-2-benzothiazolylsulphenamide, N,N-diethyl-2-benzothiazolylsulphenamide, N,N-dipropyl-2-benzothiazolylsulphenamide, N,N-dibutyl-2-benzothiazolylsulphenamide, N,N-dipentyl-2-benzothiazolylsulphenamide, N,N-dihexyl-2-benzothiazolylsulphenamide, N,N-diheptyl-2-benzothiazolylsulphenamide, N,N-dioctyl-2-benzothiazolylsulphenamide, N,N-di-2-ethylhexylbenzothiazolylsulphenamide, N,N-didecyl-2-benzothiazolylsulphenamide, N,N-didodecyl-2-benzothiazolylsulphenamide, and N,N-distearyl-2-benzothiazolylsulphenamide.

Among them, from the viewpoint of reactivity, N-cyclohexyl-2-benzothiazolylsulphenamide and N-tert-butyl-2-benzothiazolylsulphenamide are preferred.

The rubber composition preferably contains a vulcanization accelerator containing N-cyclohexyl-2-benzothiazolylsulphenamide.

From the viewpoint of enhancing the low heat generation property of the vulcanized rubber and the wet-hot adhesion of the vulcanized rubber to the steel cord, the content of the vulcanization accelerator in the rubber composition is preferably 0.5 parts by mass or more and 3.0 parts by mass or less based on 100 parts by mass of the rubber component, and more preferably 0.8 parts by mass or more and 2.0 parts by mass or less.

(Antirust agent)

An antirust agent is preferably mixed in the rubber composition.

An example of the antirust agent is a nitrogen-containing cyclic compound having a structure obtained by substituting at least one carbon atom in a cyclic compound having 5 or less carbon atoms with a nitrogen atom. The nitrogen-containing cyclic compound does not include a benzene ring and a cyclic compound containing sulfur.

Specific examples thereof include an imidazole compound and a triazole compound. Among them, at least one selected from 1,2,3-triazole, 1,2,4-triazole, 3-amino-1,2,4-triazole, 4-amino-1,2,4-triazole, and imidazole is preferred.

The content of the antirust agent in the rubber composition is preferably 0.02 parts by mass or more and 5 parts by mass or less based on 100 parts by mass of the rubber component, and more preferably 0.05 parts by mass or more and 3 parts by mass or less.

[Preparation of rubber composition]

The rubber composition can be produced by mixing the components described above and kneading the mixture using a kneader, such as a bunbury mixer, a roll, or an internal mixer.

Here, the amounts of the rubber component, the filler, the phenolic resin, and the methylene donor and various additives mixed are the same as the amounts described above as the contents thereof in the rubber composition.

Kneading of the components may be performed in one stage as a whole, or may be performed in two or more stages. An example of a method of kneading the components in two or more stages is a method in which, in a first stage, the components to be mixed other than the vulcanization accelerator and sulfur are kneaded, and then, in a second stage, sulfur and the vulcanization accelerator are kneaded.

The highest temperature in the first stage of kneading is preferably 130 to 160°C, and the highest temperature in the second stage is preferably 90 to 120°C.

<Method for producing steel cord/rubber composite>

The steel cord/rubber composite of the present invention can be produced by covering a steel cord having a ternary alloy plating applied thereon with the aforementioned rubber composition.

As a method for covering the steel cord, for example, a method as described below can be used.

Preferably, a prescribed number of steel cords are arranged in parallel at prescribed intervals and the steel cords may be covered both from the upper and lower sides with a unvulcanized rubber sheet having a thickness of about 0.5 mm formed of the rubber composition.

The rubber composition may cover at least a part of the steel cords, but preferably covers the whole surface of the steel cords from the viewpoint of enhancing the wet-hot adhesion of the vulcanized rubber to the steel cord.

The thus obtained steel cord/rubber composite is vulcanized, for example, at a temperature of about 160°C for 20 minutes, whereby the rubber composition is vulcanized to produce a steel cord/vulcanized rubber composite. The obtained steel cord/vulcanized rubber composite has an excellent metal-rubber adhesion under a wet-hot environment and the vulcanized rubber has an excellent low hysteresis loss.

The steel cord/vulcanized rubber composite is suitably used as a reinforcing material to be used in various rubber articles particularly requested to have strength, such as an automobile tire, a conveyor belt, a hose, and a rubber crawler. In particular, the steel cord/vulcanized rubber composite is suitably used as a reinforcing member of a belt, a carcass ply, a wire chafer, or the like, for an automobile radial tire.

<<Tire>>

The tire of the present invention is produced by using the steel cord/rubber composite of the present invention.

Since the tire of the present invention is produced by using the steel cord/rubber composite of the present invention, the tire is excellent in the low hysteresis loss and in the wet-hot adhesion of the vulcanized rubber to the steel cord.

A method for producing the tire of the present invention is not particularly limited, and the tire can be produced based on an ordinary method.

In general, a rubber composition containing various components is processed into each member in the unvulcanized stage, and the members are bonded on a tire molding machine by an ordinary method to mold a green tire. The green tire is heated and pressured in a vulcanizer to produce a tire. For example, the rubber composition of the present invention is kneaded and then a steel cord is rubber-coated with the obtained rubber composition to obtain a steel cord/rubber composite. An unvulcanized belt layer, an unvulcanized carcass, and other unvulcanized members are laminated and the unvulcanized laminate is vulcanized to obtain a tire.

As a gas filled in the tire, besides the general air and an air having an adjusted oxygen partial pressure, an inert gas, such as nitrogen, argon, or helium, may be used.

«Conveyor belt»

The conveyor belt of the present invention is produced by using the steel cord/rubber composite of the present invention.

Since the conveyor belt of the present invention is produced by using the steel cord/rubber composite of the present invention, the conveyor belt is excellent in the low hysteresis loss and in the wet-hot adhesion of the vulcanized rubber to the steel cord.

The steel cord/rubber composite of the present invention is molded in a heating die and is vulcanized to obtain the conveyor belt (outer periphery cover rubber or inner periphery cover rubber) of the present invention. The conveyor belt (one or both of the outer periphery cover rubber and inner periphery cover rubber) is attached to a belt conveyor, for example, as one conveyor belt with a core material as a reinforcing material interposed therein.

<<Hose>>

The hose of the present invention is produced by using the steel cord/rubber composite of the present invention.

Since the hose of the present invention is produced by using the steel cord/rubber composite of the present invention, the hose is excellent in the low hysteresis loss and in the wet-hot adhesion of the vulcanized rubber to the steel cord.

The hose of the present invention, for example, includes an inner surface rubber layer, a reinforcing layer, and an outer surface rubber layer. In this case, the steel cord/rubber composite of the present invention may be used in any one or more of the inner surface rubber layer, the reinforcing layer, and the outer surface rubber layer. The steel cord/rubber composite of the present invention is used in any one or more of the inner surface rubber layer, the reinforcing layer, and the outer surface rubber layer and is vulcanized to thereby obtain the hose of the present invention.

«Rubber crawler»

The rubber crawler of the present invention is produced by using the steel cord/rubber composite of the present invention.

Since the rubber crawler of the present invention is produced by using the steel cord/rubber composite of the present invention, the rubber crawler is excellent in the low hysteresis loss and in the wet-hot adhesion of the vulcanized rubber to the steel cord.

The steel cord/rubber composite of the present invention is molded with a heating die having a desired shape of, for example, a guide rubber, an inner periphery rubber, or a lag, and is vulcanized, whereby a rubber crawler can be obtained.

Examples

<Examples 1 to 7, Comparative Examples 1 to 3>

[Rubber composition]

Components were kneaded according to a formulation shown in Table 1 to prepare a rubber composition.

[Steel cord]

A steel cord having a brass plating applied thereon (a steel cord for Comparative Examples) was used in Comparative Examples 1 to 3, and a steel cord having a ternary alloy plating applied thereon (a steel cord for Examples) was used in Examples 1 to 7.

As the steel cord for Comparative Examples, a steel cord ($1 \times 5 \times 0.225$ mm (filament diameter)) having a yellow copper brass plating applied thereon (Cu: 63% by mass, Zn: 37 % by mass) was used.

The steel cord for Examples was produced as follows.

Plating with Cu, Zn, and Co in this order was repeated on a steel filament of a diameter of 1.7 mm so as to give a Cu content of 67.0% by mass, a Zn content of 29.0% by mass, and a Co content of 4.0% by mass in the plating. Then, a thermal diffusion treatment was applied at 550°C for 5 seconds to obtain a steel filament having a ternary alloy plating applied thereon. After that, only a top surface of the ternary alloy plating layer was subjected to high deformation (surface treatment) by a wire drawing processing with a diamond die. Thus, a steel filament having a plating average thickness of 0.25 pm and a diameter of 0.225 mm was obtained. Using the obtained steel filament, a steel cord was produced as a twisted cord having a structure of $1 \times 5 \times 0.225$ (mm).

[Production of steel cord/vulcanized rubber composite]

The steel cords were arranged in parallel at intervals of 12.5 mm and were covered with the rubber composition from the upper and lower sides of the steel cords to thus obtain a steel cord/rubber composite.

The steel cord/rubber composite was vulcanized at 160°C for 20 minutes to bond the vulcanized rubber to the steel cords. Thus, a steel cord/vulcanized rubber composite having the steel cords embedded between two rubber sheets each having a thickness of 1 mm was obtained (the steel cords were arranged in parallel to the sheet surface at intervals of 12.5 mm in the thickness central direction of the rubber sheet).

NR: natural rubber, TSR 10
Carbon black: HAF, tradename "Asahi #70L" (nitrogen adsorption specific surface area: 81 $m^2$/g) manufactured by Asahi Carbon Co., Ltd.
Silica: tradename "Nipsil AQ" (CTAB specific surface area = 155 $m^2$/g) manufactured by Tosoh Silica Corporation
Resin reaction accelerator: stearic acid, tradename "Stearic Acid 50S" manufactured by New Japan Chemical Co., Ltd.

Zinc oxide: tradename "Zinc Oxide JIS #2" manufactured by Hakusui Tech.

Antioxidant 1 (NS6): 2,2'-methylenebis(4-methyl-6-tert-butylphenol), tradename "Nocrac NS-6" manufactured by Ouchi Shinko Chemical Industrial, Co., Ltd.

Alkylphenolic resin: alkylphenol formaldehyde resin, tradename "DUREZ 19900" manufactured by Sumitomo Bakelite Europe

Organic acid cobalt salt: tradename "Manobond C" manufactured by OMG.

Phenolic resin: unmodified phenolic resin (phenol-formaldehyde resin), tradename "Sumiliteresin PR-50235" manufactured by Sumitomo Bakelite Co., Ltd.

Antioxidant 2 (6C): N-phenyl-N'-(1,3-dimethylbutyl)-p-phenylene diamine, tradename "Nocrac 6C" manufactured by Ouchi Shinko Chemical Industrial, Co., Ltd.

HMMM: hexamethoxymethylmelamine, tradename "CYREZ 964" manufactured by Allnex.

Vulcanization accelerator 1 (DCBS): sulphenamide-based vulcanization accelerator, N,N-dicyclohexylbenzothiazyl-2-sulphenamide, tradename "Nocceler DZ" manufactured by Ouchi Shinko Chemical Industrial, Co., Ltd.

Vulcanization accelerator 2 (CBS): sulphenamide-based vulcanization accelerator, N-cyclohexyl-2-benzothiazolylsulphenamide, tradename "Nocceler CZ-G" manufactured by Ouchi Shinko Chemical Industrial, Co., Ltd.

Sulfur: tradename "Powder Sulfur" manufactured by Tsurumi Chemical Industry Co., Ltd.

Bismaleimide: N,N'-(4,4'-diphenylmethane)bismaleimide, tradename "BMI-RB" manufactured by Daiwa Kasei Industry, Co., Ltd.

Vulcanization retarder: N-cyclohexylthiophthalimide, tradename "SANTOGARDPVI • PDR • D" manufactured by Flexis.

[Evaluation of steel cord/vulcanized rubber composite]

1. Wet-hot adhesion (adhesion after wet-hot aging)

The steel cord/vulcanized rubber composite was aged under an atmosphere at 75°C and a relative humidity of 95% for 4 days and then, according to ASTM D 2229-2004, the steel cord was drawn out of each sample and the coverage with the rubber adhering on the steel cord was determined as 0 to 100% by visual observation and was taken as an index of the thermal degradation.

The results showed as an index based on the result of Comparative Example 1 taken as 100. A larger index shows more excellent wet-hot adhesion between the steel cord and the vulcanized rubber, that is, a more excellent thermal degradation resistance.

$$\text{Wet-hot adhesion index} = \{(\text{coverage with rubber adhering to steel cord in sample to be tested})/(\text{coverage with rubber adhering to steel cord in sample of Comparative Example 1})\} \times 100$$

The indexes of the wet-hot adhesion between the steel cord and the vulcanized rubber of Examples and Comparative Examples are shown in Table 1.

When the index of the wet-hot adhesion exceeds 100, the wet-hot adhesion between the steel cord and the vulcanized rubber is excellent, but the index is preferably 125 or more.

2. Evaluation of low hysteresis loss

The loss tangent (tan $\delta$) of the vulcanized rubber test piece was measured at 50°C, a frequency of 15 Hz, and a strain of 4% using a viscoelasticity measuring apparatus manufactured by Rheometric Scientific.

The loss tangent was expressed as an index based on the tan $\delta$ of Comparative Example 1 taken as 100 according to the following formula.

Low hysteresis loss index = (tan $\delta$ of each vulcanized rubber/tan $\delta$ of vulcanized rubber of Comparative Example 1) $\times$ 100

A smaller low hysteresis loss index means that the vulcanized rubber is more excellent in the low heat generation property and has a smaller hysteresis loss, which means that a trial tire formed of the vulcanized rubber test piece is more excellent in the low hysteresis loss.

The low hysteresis loss indexes of Examples and Comparative Examples are shown in Table 1.

When the low hysteresis loss index is less than 100, the low hysteresis loss is excellent, but the low hysteresis loss index is preferably 90 or less.

[Table 1]

| | | Comparative Example 1 | Comparative Example 2 | Comparative Example 3 | Example 1 | Example 2 | Example 3 | Example 4 | Example 5 | Example 6 | Example 7 |
|---|---|---|---|---|---|---|---|---|---|---|---|
| Rubber composition | NR | 100 | 100 | 100 | 100 | 100 | 100 | 100 | 100 | 100 | 100 |
| | Carbon black | 40 | 40 | 46 | 40 | 40 | 40 | 40 | 40 | 40 | 46 |
| | Silica | 8 | 8 | 4 | 8 | 8 | 8 | 4 | 2 | 8 | 4 |
| | Resin reaction accelerator | 0.5 | 0.3 | 1.8 | 0.3 | 3 | 3 | 3 | 3 | 3 | 1.8 |
| | Zinc oxide | 7.5 | 7.5 | 7.5 | 7.5 | 7.5 | 7.5 | 7.5 | 7.5 | 7.5 | 7.5 |
| | Antioxidant 1 (NS6) | 2 | - | - | - | - | - | - | - | - | - |
| | Alkylphenolic resin | - | 1 | 1 | - | - | - | 1 | 1 | 1 | 1 |
| | Organic acid cobalt salt | 0.9 | 0.9 | - | - | - | - | - | - | - | - |
| | Phenolic resin | 5 | 5 | 5 | 5 | 5 | 5 | 5 | 5 | 9 | 5 |
| | Triazole | - | - | - | - | - | 0.1 | 0.2 | 0.2 | 0.2 | - |
| | Antioxidant 2 (6C) | 1 | 1 | 1 | 1 | 1 | 1 | 1 | 1 | 1 | 1 |
| | HMMM | 3 | 3 | 3 | 3 | 3 | 3 | 3 | 3 | 5 | 3 |
| | Vulcanization accelerator 1 (DZ) | 1.2 | 1.2 | - | 1.2 | - | - | - | - | - | - |
| | Vulcanization accelerator 2 (CZ) | - | - | 1.2 | - | 1.2 | 1.2 | 1.2 | 1.2 | 1.2 | 1.2 |
| | Sulfur | 6 | 6 | 6 | 6 | 6 | 6 | 6 | 6 | 6 | 6 |
| | Bismaleimide | 0.8 | 0.8 | 0.8 | 0.8 | 0.8 | 0.8 | 0.8 | 0.8 | 0.8 | 0.8 |
| | Vulcanization retarder | 0.1 | 0.1 | 0.2 | 0.1 | 0.1 | 0.1 | 0.1 | 0.1 | 0.1 | 0.2 |

EP 4 015 704 A1

(continued)

| Steel cord | | Comparative Example 1 | Comparative Example 2 | Comparative Example 3 | Example 1 | Example 2 | Example 3 | Example 4 | Example 5 | Example 6 | Example 7 |
|---|---|---|---|---|---|---|---|---|---|---|---|
| | Plating type | Brass plating | Brass plating | Brass plating | Ternary plating | Ternary plating | Ternary plating | Ternary plating | Ternary plating | Ternary plating | Ternary plating |
| Evaluation | Wet-hot adhesion (index) | 100 | 100 | 14 | 120 | 173 | 180 | 144 | 132 | 142 | 276 |
| | Low hysteresis loss (index) | 100 | 95 | 98 | 96 | 88 | 84 | 85 | 82 | 83 | 98 |

As can be seen from Table 1, even with a rubber composition containing a rubber component, a filler, a phenolic resin, and a methylene donor, the rubber composition having a cobalt compound content of 0.01 parts by mass or less based on 100 parts by mass of the rubber component, in Comparative Example 3 in which a steel cord having a ternary alloy plating applied thereon is not used as the steel cord, the wet-hot adhesion is not excellent although the low hysteresis loss of the vulcanized rubber is excellent.

In Comparative Examples 1 and 2 in which a steel cord having a ternary alloy plating applied thereon is not used as the steel cord like in Comparative Example 3, since the rubber composition contains a cobalt compound, it is not possible to achieve both the wet-hot adhesion between the vulcanized rubber and the steel cord and the low hysteresis loss at higher levels than in Comparative Example 2.

In contrast, it can be seen that, in all of Examples 1 to 7 in which the steel cord/rubber composite contains a rubber component, a filler, a phenolic resin, and a methylene donor, and in which a rubber composition having a cobalt compound content of 0.01 parts by mass or less based on 100 parts by mass of the rubber component and a steel cord having a ternary alloy plating applied thereon are combined, the wet-hot adhesion index exceeds 100 and the low hysteresis loss index is less than 100, that is, an excellent low hysteresis loss and an excellent wet-hot adhesion are both achieved at high levels.

Industrial Applicability

The steel cord/rubber composite of the present invention, which is excellent in wet-hot adhesion between a vulcanized rubber and a steel cord and is excellent in low hysteresis loss of the vulcanized rubber, is suitable not only for production of a passenger car tire but also for production of a heavy load tire, such as a truck/bus tire.

**Claims**

1.  A steel cord/rubber composite comprising a steel cord and a rubber composition that covers the steel cord, the rubber composition containing a rubber component, a filler, a phenolic resin, and a methylene donor, and having a cobalt compound content of 0.01 parts by mass or less based on 100 parts by mass of the rubber component, the steel cord having a ternary alloy plating applied thereon.

2.  The steel cord/rubber composite according to claim 1, wherein the filler comprises a carbon black and a silica.

3.  The steel cord/rubber composite according to claim 2, wherein the rubber composition contains the carbon black in an amount of 35 parts by mass or more and 50 parts by mass or less based on 100 parts by mass of the rubber component.

4.  The steel cord/rubber composite according to claim 2 or 3, wherein the carbon black has a nitrogen adsorption specific surface area of 70 $m^2$/g or more and 90 $m^2$/g or less and a dibutyl phthalate absorption of 50 mL/100 g or more and 110 mL/100 g or less.

5.  The steel cord/rubber composite according to any one of claims 2 to 4, wherein the rubber composition contains the silica in an amount of more than 0 parts by mass and 15 parts by mass or less based on 100 parts by mass of the rubber component.

6.  The steel cord/rubber composite according to any one of claims 1 to 5, wherein the rubber composition contains a vulcanization accelerator comprising N-cyclohexyl-2-benzothiazolylsulphenamide.

7.  The steel cord/rubber composite according to any one of claims 1 to 6, wherein the phenolic resin contains two or more phenolic resins comprising at least an alkylphenolic resin.

8.  The steel cord/rubber composite according to claim 7, wherein the phenolic resin comprises an unmodified phenol-formaldehyde resin and an alkylphenol-formaldehyde resin.

9.  The steel cord/rubber composite according to any one of claims 1 to 8, wherein the cobalt compound content in the rubber composition is 0% by mass.

10. The steel cord/rubber composite according to any one of claims 1 to 9, wherein the ternary alloy plating on the steel cord is of metal species comprising copper, zinc, and cobalt.

11. The steel cord/rubber composite according to any one of claims 1 to 10, wherein the steel cord is surface-treated on the alloy plating.

12. A tire produced by using the steel cord/rubber composite according to any one of claims 1 to 11.

13. A conveyor belt produced by using the steel cord/rubber composite according to any one of claims 1 to 11.

14. A hose produced by using the steel cord/rubber composite according to any one of claims 1 to 11.

15. A rubber crawler produced by using the steel cord/rubber composite according to any one of claims 1 to 11.

## INTERNATIONAL SEARCH REPORT

| | International application No. |
|---|---|
| | PCT/JP2020/030431 |

**A. CLASSIFICATION OF SUBJECT MATTER**
D07B 1/06(2006.01)i; B60C 1/00(2006.01)i; B65G 15/36(2006.01)i; C08J 5/04(2006.01)i; C08K. 3/04(2006.01)i; C08K. 3/08(2006.01)i; C08K. 3/36(2006.01)i; C08L 21/00(2006.01)i; C08L 61/04(2006.01)i; D06M 11/74(2006.01)i; D06M 11/79(2006.01)i; D06M 11/83(2006.01)i; D06M 15/41(2006.01)i; D06M 15/693(2006.01)i; F16L 11/08(2006.01)i
FI: D07B1/06; B60C1/00 C; B65G15/36; D06M11/74; D06M11/79; D06M11/83; D06M15/41; D06M15/693; F16L11/08 A; C08J5/04; C08L21/00; C08L61/04; C08K3/08; C08K3/04; C08K3/36

According to International Patent Classification (IPC) or to both national classification and IPC

**B. FIELDS SEARCHED**

Minimum documentation searched (classification system followed by classification symbols)
D07B1/00-9/00; C08K3/00-13/08; C08L1/00-101/14; B60C1/00; B65G15/36; D06M11/74; D06M11/79; D06M11/83; D06M15/41; D06M15/693; F16L11/08; C08J5/04

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/052451 A1 (BRIDGESTONE CORPORATION) 07 April 2016 (2016-04-07) claim 1, paragraphs [0002], [0003], [0024]-[0028], [0031], [0035], example 4 | 1,6-10,12-14 |
| Y | | 1-15 |
| Y | JP 01-113233 A (SUMITOMO ELECTRIC INDUSTRIES, LTD.) 01 May 1989 (1989-05-01) claims, page 2, upper left column, lines 7-10, examples | 1-15 |
| Y | WO 2017/047587 A1 (BRIDGESTONE CORPORATION) 23 March 2017 (2017-03-23) examples | 2-15 |

☒ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 October 2020 (05.10.2020) | 27 October 2020 (27.10.2020) |

| Name and mailing address of the ISA/ Japan Patent Office 3-4-3, Kasumigaseki, Chiyoda-ku, Tokyo 100-8915, Japan | Authorized officer |
| | Telephone No. |

Form PCT/ISA/210 (second sheet) (January 2015)

**INTERNATIONAL SEARCH REPORT**

International application No.

PCT/JP2020/030431

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2014-080475 A (SUMITOMO RUBBER INDUSTRIES, LTD.) 08 May 2014 (2014-05-08) claims 1, 2, paragraphs [0042], [0043], [0092], examples 1-7, 12-22 | 4-15 |
| Y | WO 2016/158676 A1 (ZEON CORP.) 06 October 2016 (2016-10-06) paragraphs [0158], [0172] | 4-15 |
| Y | JP 05-278147 A. (NIPPON STEEL CORP.) 26 October 1993 (1993-10-26) claim 1, paragraphs [0001], [0005] | 11-15 |
| Y | JP 2003-160895 A (KANAI, Hiroaki) 06 June 2003 (2003-06-06) claim 1, paragraph [0001] | 11-15 |
| Y | WO 2014/192811 A1 (BRIDGESTONE CORPORATION) 04 December 2014 (2014-12-04) paragraph [0022] | 15 |
| Y | JP 2006-312744 A (THE YOKOHAMA RUBBER CO., LTD.) 16 November 2006 (2006-11-16) paragraph [0019] | 15 |
| Y | JP 2004-216977 A (SUMITOMO RUBBER INDUSTRIES, LTD.) 05 August 2004 (2004-08-05) claim 1 | 1-15 |
| A | JP 2017-7427 A (BRIDGESTONE CORPORATION) 12 January 2017 (2017-01-12) examples 2-23 to 2-29 | 1-15 |
| A | CN 105440333 A (SAILUN CO., LTD.) 30 March 2016 (2016-03-30) examples | 1-15 |
| A | JP 2014-019062 A (SUMITOMO RUBBER INDUSTRIES, LTD.) 03 February 2014 (2014-02-03) claim 1, paragraph [0024], examples | 1-15 |
| A | JP 2012-207200 A (SUMITOMO RUBBER INDUSTRIES, LTD.) 25 October 2012 (2012-10-25) claims, examples | 7,8 |

Form PCT/ISA/210 (continuation of second sheet) (January 2015)

**INTERNATIONAL SEARCH REPORT**
Information on patent family members

International application No.

PCT/JP2020/030431

| Patent Documents referred in the Report | Publication Date | Patent Family | Publication Date |
|---|---|---|---|
| WO 2016/052451 A1 | 07 Apr. 2016 | (Family: none) | |
| JP 01-113233 A | 01 May 1989 | (Family: none) | |
| WO 2017/047587 A1 | 23 Mar. 2017 | (Family: none) | |
| JP 2014-080475 A | 08 May 2014 | DE 102013220522 A1 CN 103724679 A | |
| WO 2016/158676 A1 | 06 Oct. 2016 | (Family: none) | |
| JP 05-278147 A | 26 Oct. 1993 | (Family: none) | |
| JP 2003-160895 A | 06 Jun. 2003 | (Family: none) | |
| WO 2014/192811 A1 | 04 Dec. 2014 | US 2016/0122944 A1 paragraph [0042] EP 3006621 A1 CN 105264141 A | |
| JP 2006-312744 A | 16 Nov. 2006 | (Family: none) | |
| JP 2004-216977 A | 05 Aug. 2004 | (Family: none) | |
| JP 2017-7427 A | 12 Jan. 2017 | WO 2016/203886 A1 | |
| CN 105440333 A | 30 Mar. 2016 | (Family: none) | |
| JP 2014-019062 A | 03 Feb. 2014 | (Family: none) | |
| JP 2012-207200 A | 25 Oct. 2012 | US 2012/0234452 A1 claims, examples CN 102675694 A | |

Form PCT/ISA/210 (patent family annex) (January 2015)

18

**EP 4 015 704 A1**

**Patent documents cited in the description**

- WO 2018230048 A